# EUROPEAN PATENT APPLICATION

(11) **EP 4 599 921 A1**
(43) Date of publication of application: **13.08.2025**
(21) Application number: 24157133.0
(22) Date of filing: 12.02.2024
(51) Int. Cl.: B01D 53/14

(54) **AMMONIA HANDLING SYSTEM AND METHOD**

(71) Applicant: Alfa Laval Corporate AB, 221 00 Lund (SE)
(72) Inventor: MØLGAARD, Søren, DK-9530 STØVRING (DK); BJERG, Allan, DK-9000 AALBORG (DK)
(74) Representative: Alfa Laval Attorneys

(57) **Abstract**

A system (100) for removing ammonia from a purge is disclosed. The system comprises an ammonia absorption arrangement (110) configured to accommodate an absorption liquid for absorbing the ammonia from the purge gas, wherein the ammonia absorption arrangement comprises a temperature management system (120) operable to control a temperature of the absorption liquid, and a controller (130) configured to operate the ammonia absorption arrangement in an absorption mode and a regeneration mode. In the absorption mode, the absorption liquid is maintained at a first temperature and the purge gas is passed through the absorption liquid to remove the ammonia from the purge gas. In the regeneration mode, the absorption liquid is maintained at a second temperature, exceeding the first temperature, and the ammonia-water vapour, originating from the absorption liquid, is evacuated from the ammonia absorption arrangement to reduce an ammonia concentration in the absorption liquid.

## Description

### Technical Field

The present disclosure pertains to technologies for handling ammonia, and more specifically to systems and methods for removing ammonia from purge gas in ammonia-based fuel systems.

### Background

Conventionally, boilers and engines for marine applications operate on carbon-based fuels. While these fuels are effective in generating the necessary heat and power, their use has come under increasing scrutiny due to their contribution to carbon dioxide emissions and, consequently, global warming.

To mitigate environmental impact, a shift towards ammonia-based fuels is being proposed. Ammonia is a promising alternative to the carbon-based fuels, as its carbon-free composition helps eliminating carbon dioxide emissions during combustion. However, this shift presents a new challenge in terms of safety concerns, as exposure to high concentrations of ammonia may pose an immediate, life-threatening hazard to the human body. Therefore, auxiliary systems designed for ammonia capture have been proposed to address safety concerns in connection with planned shutdowns and emergency situations. These systems typically employ a purge gas to remove ammonia from various pipes and equipment, ensuring the safety of personnel onboard the vessel. After ammonia extraction, the purge gas is exposed to water. This process allows water to absorb the ammonia, allowing the purge gas to be safely released into the environment or reused.

As the industry increasingly shifts towards ammonia-based fuels, there is a need for alternative and improved technologies to remove ammonia from purge gas in ammonia-based fuel systems.

### Summary

It is an object of the present disclosure to provide a technology that addresses at least some of the above concerns.

According to a first aspect, there is provided a system for removing ammonia from a purge gas originating from an ammonia-based fuel system. The system comprises an ammonia absorption arrangement configured to accommodate a water-based absorption liquid for absorbing the ammonia from the purge gas, wherein the ammonia absorption arrangement comprises a temperature management system operable to control a temperature of the absorption liquid. The system further comprises a controller configured to operate the ammonia absorption arrangement in an absorption mode and in a regeneration mode. In the absorption mode, the absorption liquid is maintained at a first temperature and the purge gas is passed through the absorption liquid to remove the ammonia from the purge gas. In the regeneration mode, the absorption liquid is maintained at a second temperature, exceeding the first temperature, whereby ammonia-water vapour, originating from the absorption liquid, is evacuated from the ammonia absorption arrangement to reduce an ammonia concentration in the absorption liquid.

According to a second aspect, there is provided a method for removing ammonia from a purge gas originating from an ammonia-based fuel system. The method comprises passing the purge gas through a water-based absorption liquid of an ammonia absorption arrangement while maintaining the absorption liquid at a first temperature, and evacuating ammonia-water vapour, originating from the absorption liquid, from the ammonia absorption arrangement while maintaining the absorption liquid at a second temperature, thereby reducing an ammonia concentration in the absorption liquid, wherein the second temperature exceeds the first temperature.

When the purge gas contacts the absorption liquid, the ammonia in the purge gas can be absorbed by the water in the absorption liquid, forming an ammonia-water solution. The absorption capacity of the absorption liquid depends on several factors, such as the temperature and pressure of the absorption liquid, and the concentration of ammonia within it. Upon saturation of the absorption liquid with ammonia, any excess ammonia in the purge gas remains unabsorbed. The inventors have devised an approach to address this limitation by operating the ammonia absorption arrangement in a `regeneration mode'. In this mode, the absorption liquid is heated to promote evaporation of ammonia from the absorption liquid, reducing the concentration of ammonia in the absorption liquid and restoring its absorption capacity. This process is known as regenerating the absorption liquid. Advantageously, the resulting ammonia-enriched vapour can be directed to a consumer like an engine or a boiler for use as fuel. The present aspects present an alternative to conventional technologies where the absorption liquid is either combusted and replaced or the ammonia is extracted through filtering or chemical methods. Regenerating the absorption liquid according to the present aspects allows for resources such as fresh water, filters, and chemicals for cleaning to be saved. Fresh water is typically produced onboard, requiring heat/electricity. It is therefore desirable to reduce the consumption of fresh water. Extracting the ammonia through chemical methods typically generates chemical waste that must be handled and disposed of, which may be subject to costs. Therefore, it is also desirable to reduce the generation of chemical waste.

In the regeneration mode, the absorption liquid may be heated to a second temperature, which may be chosen to ensure the pressure within the absorption liquid exceeds the ambient pressure of the ammonia absorption arrangement. This pressure differential may enable the ammonia-water vapour to be naturally evacuated, without the need for a fan or any other pressure-generating assistance. Put differently, the absorption liquid may be heated to a sufficiently high temperature to create a driving pressure that expels the ammonia-water vapour from the absorption arrangement. Opting not to use additional components, like a fan, for driving the vapour flow can be advantageous. This approach reduces system complexity and hence the risk of leakages and failures. As a result, a naturally flowing ammonia-water vapour allows for a simpler and more robust system design.

Furthermore, the second temperature may be chosen to prevent boiling of the absorption liquid, as boiling could undesirably increase the water concentration in the ammonia-water vapour. Therefore, the second temperature may be maintained within a specific range that fulfils both conditions: facilitating the natural flow of ammonia-water vapour without causing the absorption liquid to boil.

It should be noted that the ammonia absorption arrangement also can operate under various conditions, including temperature resulting in ammonia-water vapour pressures not exceeding the ambient pressure. For instance, in certain scenarios, the second temperature may be set to necessitate the evacuation of ammonia-water vapour from the ammonia absorption arrangement using an induced underpressure, such as that created by a fan. Additionally, the operation of the ammonia absorption arrangement may not be limited to ambient atmospheric pressure. It can be maintained either in a pressurised state (e.g., in a pressurised tank or vessel) or under sub-atmospheric pressure conditions. Consequently, the second temperature may be adjusted to optimise the generation of ammonia-water vapour, ensuring efficient operation under these varied pressure conditions.

As will be elaborated upon in the subsequent description of the drawings, the solubility of ammonia in the absorption liquid typically diminishes with rising temperatures. Consequently, at higher temperatures, the absorption liquid dissolves less ammonia, resulting in a greater proportion of ammonia in the vapour phase. Therefore, the ammonia concentration in the ammonia-water vapour generated during the regeneration mode may be determined, *inter alia,* by the temperature and the initial ammonia concentration in the absorption liquid. When using this ammonia-water vapour as fuel in boilers or engines, it is desirable to achieve a high enough ammonia concentration to ensure efficient combustion. This lower ammonia concentration threshold may vary depending on the consumer type (i.e., boilers or engines), their operational conditions, and the desired combustion efficiency. For instance, the ammonia-water vapour may be ignited using a pilot or support flame, and the effectiveness of this combustion process can depend on characteristics of these flames. However, it will be appreciated that the ammonia concentration in the ammonia-water vapour, and/or its flammability, may be used to determine the settings for the regeneration mode. Hence, in the regeneration mode, the ammonia absorption arrangement may be operated at conditions - both temperature and ammonia concentration in the liquid - that yield an ammonia-water vapour with an ammonia concentration above a predetermined minimum. If the ammonia concentration in the ammonia-water vapour reaches or falls below this the lower limit, the regeneration mode may need to be concluded.

The flammability of the ammonia-water vapour generally refers to the ease with which a stoichiometric mixture of oxygen and the ammonia-water vapour can ignite under certain conditions, such as through a support flame. This flammability is typically influenced by the ammonia concentration in the vapour. Therefore, the flammability characteristic can be utilised to determine an acceptable or desired minimum concentration of ammonia in the ammonia-water vapour. Consequently, in some cases, the second temperature - the temperature at which the absorption liquid is maintained in the regeneration mode - may be chosen such that the ammonia concentration in the ammonia-water vapour permits a stoichiometric mixture of oxygen and ammonia-water vapour to be flammable at temperatures of 400°C or lower, such as 300°C or lower.

Various parameters can be used to control the operation of the ammonia absorption arrangement, particularly in the regeneration mode. In certain instances, the regeneration mode may be sustained until the ammonia concentration in the ammonia-water vapour reaches a predetermined threshold. This ammonia content can be quantified as a mole fraction in the ammonia-water vapour, with the lower limit typically ranging between 30 and 40%, such as around 34%. Alternatively, the regeneration mode may continue until the ammonia concentration of the absorption liquid falls to a pre-established lower limit, also expressible as a mole fraction. For example, this limit may be in the range of 4 and 8%, possibly with a specific target around 6%.

In some examples, the second temperature is in the range of 55-95°C, such as 75-95°C. The second temperature may be sustained until the concentration of ammonia in the absorption liquid and/or the ammonia-water vapour reaches the lower limit, as discussed above.

As mentioned above, the ammonia concentration in the absorption liquid and/or the ammonia-water vapour may be expressed in terms of mole fraction, i.e., moles of ammonia per total moles of all species in the liquid/vapour. Other measures of concentration may however be used, such as mass concentration, volume concentration, molarity, and molality.

The ammonia absorption arrangement may comprise a chamber, tank, or vessel designed to accommodate the absorption liquid, or portions thereof, during operation. For instance, a single chamber might be utilised for both the absorption and regeneration modes. This typically necessitates halting or redirecting the flow of purge gas, possibly to a different chamber, when operating in the regeneration mode. Alternatively, the ammonia absorption arrangement may comprise distinct chambers or units for absorption and regeneration, respectively. This may involve an absorption chamber dedicated to maintaining the absorption liquid at the first temperature for ammonia removal from the purge gas, and a separate regeneration or heating chamber for elevating the absorption liquid to the second temperature to generate ammonia-water vapour. These chambers may be fluidically interconnected, allowing for the circulation of the absorption liquid between them. Employing separate chambers for absorption and regeneration may allow for the ammonia absorption arrangement to be operated in both modes at the same time. Consequently, the ammonia absorption arrangement may continuously process purge gas, regardless of any ongoing regeneration of the absorption liquid.

The absorption liquid may be water-based, such as pure water or water mixed with additional substances. For example, the absorption liquid might consist of water with or without added components like acids.

The purge gas typically comprises an inert gas, such as nitrogen. However, it is understood that other gases or gas mixtures can also be utilised, including for example, argon, helium, carbon dioxide, combusted air, or their mixtures.

Further features and advantages of the invention will become apparent from the following description of preferred embodiments of the invention, given by way of example only, which is made with reference to the accompanying drawings.

### Brief Description of the Drawings

Various aspects and examples of the present disclosure will be readily understood from the embodiments discussed in the following detailed description and the accompanying drawings, in which:
Figure 1 shows a schematic outline of a system comprising an ammonia absorption arrangement and a controller according to an example.
Figure 2 shows a cross section of an ammonia absorption arrangement.
Figure 3 shows a schematic outline of a system comprising an ammonia absorption arrangement and a controller according to another example.
Figure 4 is a diagram schematically illustrating the operation of the system in an absorption mode and a regeneration mode.

### Detailed Description

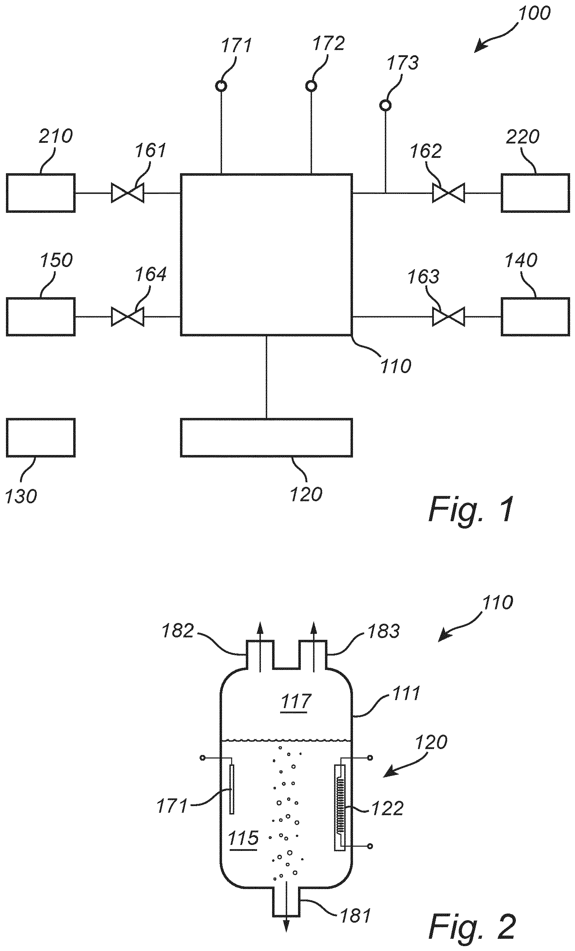

Figure 1 is a schematic illustration of a system 100 for removing ammonia from a purge gas originating from an ammonia-based fuel system 210. The system 100 comprises an ammonia absorption arrangement 110, hereafter also referred to as an 'absorber' or `absorption tank'. The absorber 110 accommodates a water-based absorption liquid, in this example water, specifically for absorbing ammonia from the purge gas. Additionally, the system 100 comprises a controller 130 for controlling the operation of the absorber 110. During use, the absorber 110 functions in at least two distinct modes: the absorption mode and the regeneration mode. During the absorption mode, the absorption liquid captures ammonia from the purge gas, forming an ammonia-water solution. Conversely, in the regeneration mode, this ammonia-water solution is heated, prompting the release and evacuation of ammonia-water vapour. As the ammonia concentration is higher in the ammonia-water vapour than in the absorption liquid, the ammonia concentration in the absorption liquid can be effectively reduced as the ammonia-water vapour leaves the absorber 110.

The purge gas may be used as a safety measure for evacuating residual ammonia from various pipes and equipment, ensuring personnel are not inadvertently exposed to the ammonia. This safety protocol may be commonly employed in marine fuel systems that supply boilers or engines (referred to as 'consumers' 220) with ammonia-based fuel. Typically, the fuel system 210 transports ammonia from a storage tank to the consumer 220. In the event of a shutdown of the consumer, whether planned or an emergency, a fuel shutoff valve at the storage tank may be closed to halt the ammonia flow. However, some ammonia may remain trapped in the fuel system 210, between the shutoff valve and the consumer. In such cases, the purge gas is employed to safely evacuate this residual ammonia, carrying it to the absorber 110. Here, the ammonia may be absorbed into the water-based absorption liquid. Subsequently, the purge gas, now cleaned from ammonia, can be safely released through an outlet or a degassing arrangement 140.

The absorber 110 may comprise a temperature management system 120 for controlling and regulating the temperature of the absorption liquid. During the absorption mode, the temperature may be relatively low, such as about 30°C, to allow ammonia to be absorbed by the absorption liquid. The temperature management system 120 may, for example, comprise a heating/cooling element immersed in the absorption liquid, or a heat exchanger for heating/cooling the absorption liquid.

One or more sensors may be provided to generate sensor signals indicating various characteristics of the absorber 110 and the operation thereof. The sensor signals may be supplied to the controller 130, which may use the various characteristics for controlling the operation of the system 100. In the present example, a temperature sensor 171 is arranged to measure a temperature of the absorption liquid. The temperature may be used by the controller to regulate the heating/cooling provided by the temperature management system 120. Further, an ammonia sensor 172 may be provided to generate a signal indicating the concentration of ammonia in the absorption liquid. The concentration of ammonia may, for example, be measured by an ion-selective electrode sensor utilising two electrodes measuring a potential difference indicating the amount of ammonium in the absorption liquid. The concentration of ammonia in the absorption liquid may also be estimated by means of pH measurement, which also may correlate with the concentration of ammonium. Further sensors may be provided, such as a gas sensor 173 arranged to measure the ammonia concentration in the ammonia-water vapour. The gas sensor 173 may for example utilise UV spectroscopy or tuneable laser spectrometry to measure the ammonia concentration.

The system 100 may further comprise a plurality of valves for controlling the flow of liquids and gases to and from the absorber 110. The system illustrated in figure 1 comprises a gas supply valve 161 arranged to control the flow of purge gas supplied to the absorber 110. The gas supply valve 161 may allow the purge gas to flow to the absorber 110 during the absorption mode and halt the flow during the regeneration mode. The system further comprises a vapour exhaust valve 162, which may be arranged to allow the ammonia-water vapour to be evacuated from the absorber 110 and flow to the consumer 220 during the regeneration mode and to halt the flow in the absorption mode. A purge gas exhaust valve 163 may be arranged in the absorption mode to allow the purge gas to continue to the degassing arrangement 140 after exposure to the absorption liquid. During the regeneration mode, the purge gas exhaust valve 163 may be closed to prevent the ammonia-water vapour from flowing to the degassing arrangement 140. A water supply valve 164 may also be provided, controlling the supply of water from a water supply 150. The operation of the valves may be controlled by the controller 130, which hence may open/close the valves according to the mode in which the absorber 110 is being operated.

Figure 2 is a schematic cross section of an ammonia absorption arrangement, or absorber, according to some examples. The ammonia absorber 110 may be similarly configured as the one discussed above with reference to figure 1. The absorber 110 may comprise a chamber or tank 111 accommodating the absorption liquid, such as water 115, and ammonia-water vapour 117. Due to the influence of gravitation, the water 115 may be arranged at the bottom of the tank 111 and the vapour 117 at the top of the tank 111.

The tank 110 comprises a purge gas inlet 181 arranged to allow the gas to pass through the water 115 and ammonia to be absorbed by the water 115. This type of absorber may in some examples be referred to as a scrubber or gas scrubber. In the present example, the purge gas inlet 181 is arranged at the bottom of the tank 111 to allow the purge gas to be bubbled through the water 115 and evacuated through a purge gas outlet 182 arranged at the top portion of the tank 111. The top portion of the tank 111 may also comprise a vapour outlet 183 for evacuating the ammonia-water vapour 117 during the regeneration mode. As mentioned above, valves may be provided to control the flow of purge gas through the tank 111 and the evacuation of the ammonia-water vapour 117. The valves may be operable to allow a flow of the purge gas during the absorption mode and to halt the flow during the regeneration mode. Accordingly, a flow of ammonia-water vapour may be allowed in the regeneration mode and be halted in the absorption mode.

The tank 111 is equipped with a temperature management system 120 designed to regulate the temperature of the water 115. In this specific example, a heat transfer element 122 is immersed in the water 115, facilitating heat exchange between the water 115 and a thermal liquid of a heat exchanger (not shown in the figure). It should however be noted that this is just one possible method of heat transfer; various other mechanisms could be employed to achieve a temperature control.

The temperature management system 120 may operate based on feedback from a temperature sensor 171. This sensor 171, which in the present example also is immersed in the water 115, provides signals indicative of the water's temperature to the controller 130 via a wired connection.

The absorber 110 may include additional inlets, outlets, and sensors, which are not depicted in this particular illustration, to further enhance its functionality.

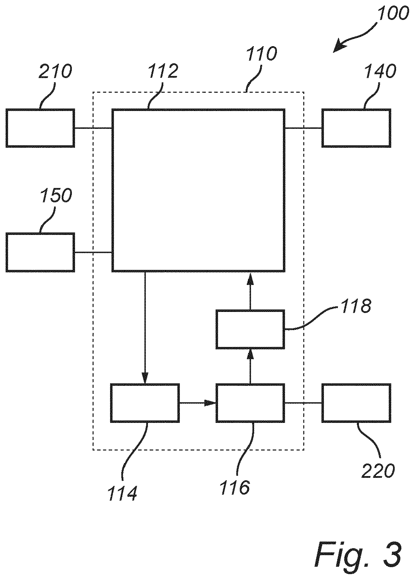

Figure 3 is a schematic illustration of an example system 100, which may be similar to the system 100 depicted in figure 1. However, in this particular example, the ammonia absorption arrangement 110 comprises a plurality of units, each serving specific functions during the absorption and regeneration modes. Specifically, the absorber 110 comprises an absorption chamber 112. In this chamber, purge gas may be introduced to allow the ammonia in the gas to come into contact with the water. This facilitates the absorption of ammonia from the gas. After this absorption process, the now ammonia-depleted purge gas is then evacuated from the absorption chamber. Thus, the absorption chamber 112 plays a role in executing the absorption mode of the absorber 110.

Further, the absorber 110 comprises a heating unit 114. In this unit 114, the water is heated during the regeneration mode. The heating unit 114, which also may be referred to as a heating chamber or heating tank, may comprise a heat exchanger arranged to heat the water. The heating unit 114 may hence assist in executing the regeneration mode, in which the ammonia concentration of the absorption liquid may be reduced to allow the absorption liquid to be reused in the absorption mode. The absorption chamber 112 and the heating unit 114 may be fluidically interconnected to allow the water to circulate between them. Consequently, some of the water may be present in the absorption chamber 112 to remove ammonia from the purge gas while some of the water is being regenerated by means of the heating unit 114. The absorption mode and the regeneration mode may hence be carried out at the same time, such as concurrently or simultaneously.

The heating unit 114 may be arranged to heat the absorption liquid to the temperature used in the regeneration mode. In some examples, the generated ammonia-water vapour may be evacuated from the heating unit 114 and guided towards the consumer 220. In other examples, such as the one shown in figure 3, there may be provided a separate evaporation chamber 116 to which the heated absorption liquid may be transported and from which the ammonia-water vapour may be evacuated to the consumer 220. The evaporation chamber 116 may also comprise a purge gas outlet for evacuating the purge gas to, e.g., a degassing arrangement 140.

In some examples, a cooling unit 118, or cooling chamber 118, may be provided for cooling the absorption liquid before it is recirculated back to the absorption chamber 112. The cooling unit 118 may, for example, comprise a heat exchanger for cooling the absorption liquid. In this particular example, a heating element of the temperature management system may be arranged to heat the absorption liquid in the heating unit 114 whereas a cooling element of the temperature management system may be arranged to cool the absorption liquid in the cooling unit 118. The heating element and/or the cooling element may form part of a respective heat exchanger transporting heat from a heat source and to a cooling source.

In the present configuration of the system 100, the absorption mode may be carried out by means of the absorption chamber 112 and the regeneration mode by means of a combination of the heating unit 114, the evaporation chamber 116, and the cooling unit 118.

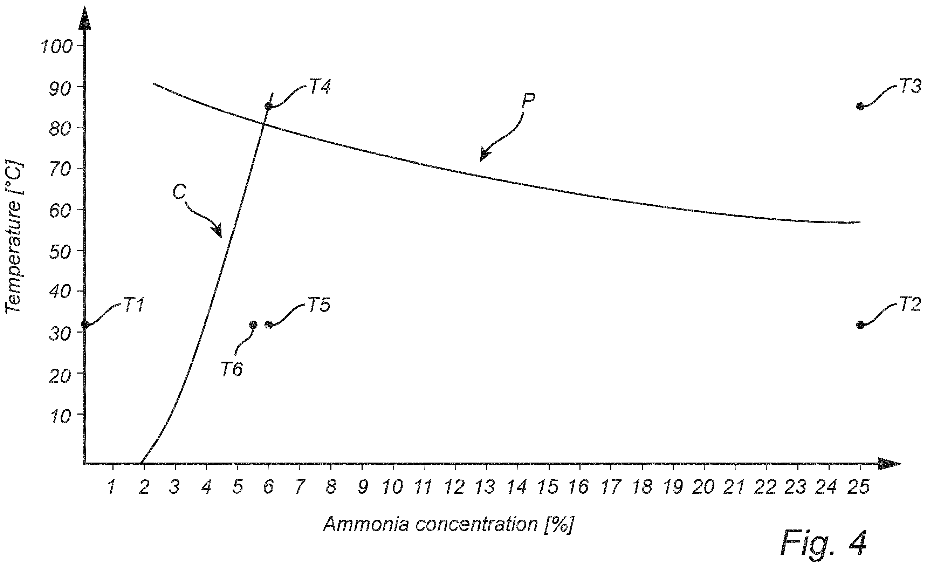

In the following discussion, an example of operating the system 100 will be explored with reference to the diagram of figure 4. The system 100 may be similarly configured as any of the systems disclosed with reference to figures 1-3 and for brevity, details common to these systems will not be reiterated here.

Figure 4 features a diagram where the ammonia concentration in the absorption liquid, expressed as a molar fraction, is plotted on the horizontal axis (ranging from 0 to 25%). The vertical axis represents the temperature of the absorption liquid, spanning from 0 to 100°. The diagram includes two curves: a pressure curve P and an ammonia concentration curve C. Each of these curves provides insights into the system's operation and will be discussed in detail in the following sections.

The pressure curve P in the diagram represents the relationship between the temperatures and ammonia concentrations in the absorption liquid at which the internal pressure of the absorber 110 equals atmospheric pressure. Effectively, this curve P can be regarded as an isobar. When operating conditions (temperature and ammonia concentration in the absorption liquid) are above this curve, a driving pressure is naturally generated. This pressure propels the ammonia-water vapour towards the consumer 220, facilitating its flow without the aid of a fan. Therefore, in the regeneration mode, selecting a temperature that corresponds to a point above the pressure curve P for a given ammonia concentration in the absorption liquid may ensure that the ammonia-water vapour may flow naturally out of the absorber 110. In simpler terms, the area above the pressure curve P defines the temperature range suitable for achieving a natural flow of ammonia-water vapour during the regeneration mode.

The concentration curve C indicates the specific combination of temperature and ammonia concentrations in the absorption liquid that result in the generation of ammonia-water vapour with a particular ammonia concentration - in this example a mole fraction of 51%. Thus, this curve can be characterised as an isopleth. It outlines the range of temperatures and ammonia concentrations necessary to ensure that the ammonia concentration in the ammonia-water vapour remains above a predetermined lower limit, such as 51%. Put simply, the region to the right of the concentration curve C represents the conditions under which the ammonia-water vapour, generated during the regeneration mode, attains an ammonia concentration that is suitable for use as fuel.

A method for operating the system 100, alternating between the absorption mode and the regeneration mode, will be explained by referencing points T1-T6, which represent different states of the system at various times.

At T1, the absorber 110 may comprise fresh water, free of ammonia. Thus, the ammonia concentration may be essentially zero.

At T2, ammonia has been introduced into the absorption liquid via the purge gas, leading to an ammonia mole fraction of 25%. The duration from T1 to T2 may constitute the absorption mode or absorption phase, during which the system removes ammonia from the purge gas. During this phase, the absorption liquid may be maintained at a relatively low temperature, exemplified here as 32°C.

Upon reaching T2, a decision (potentially made by the controller 130) may be made to regenerate the absorption liquid. This marks the commencement of the regeneration mode, which involves stopping the purge gas flow and initiating the increase in absorption liquid temperature.

At T3, the absorption liquid has reached a relatively high temperature, such as 85°C. As this point, which is above the pressure curve P and to the right of the concentration curve C, ammonia-water vapour is generated. This vapour has a pressure driving it towards the vapour outlet 183 and an ammonia concentration suitable for efficient combustion in the consumer 220, potentially assisted by a support flame. The temperature may be maintained constant while the vapour is evacuated from the absorber 110, continuing until the ammonia concentration in the absorption liquid drops to the lower limit defined by the concentration curve C at T4. This interval, from T3 to T4, may constitute the regeneration phase, during which the ammonia content in the absorption liquid is reduced, thereby enhancing its absorption capacity. In this example, the lowest achievable ammonia concentration is a mole fraction of 6%.

The system 100 may then be readied for a return to the absorption mode. This involves reducing the temperature back to the initial absorption mode level, here 32°C, achieved at T5. However, as some water might have been lost in the form of ammonia-water vapour during regeneration, fresh water is added to the absorber 110 to replenish the volume. This addition slightly dilutes the remaining ammonia, resulting in a concentration, as seen at T6, of approximately 5.5% mole fraction.

With these adjustments, the system 100 is set to commence a new absorption phase. The process begins anew by passing purge gas through the absorption liquid until the ammonia concentration in the absorption liquid reaches an upper limit, exemplified by the 25% noted at T2.

As mentioned above, the system 100 may be controlled by the controller, or control unit 130, which may be incorporated in the absorber 110 or arranged at another location, physically separate from the absorber 110. The controller 130 may be communicatively connected to the sensor(s) 171, 172, 173, operable to actuate the valves 161, 162, 163, 164, and to control the operation of the temperature management system 120 as discussed in connection with figure 1.

The control unit 130 may generally comprise one or more processors and one or more non-transitory computer-readable media storing first computer executable instructions that, when executed by the one or more processors, cause the system 100 to perform at least parts of the actions discussed in connection with figure 4. Generally, the control unit 130 may comprise circuitry which is configured to implement (using one or more non-transitory computer-readable media) the functionality described herein. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits). Those skilled in the art will understand that the above-described exemplary embodiments may be implemented in any suitable software, hardware, or firmware configuration or combination thereof. An exemplary hardware platform for implementing the exemplary embodiments may include, for example, an Intel x86 based platform with compatible operating system, a Windows OS, a Mac platform and MAC OS, a mobile device having an operating system such as iOS, Android, etc. In a further example, the exemplary embodiments of the above-described method may be embodied as a program containing lines of code stored on a non-transitory computer readable storage medium that, when compiled, may be executed on a processor or microprocessor.

In conclusion, the present disclosure provides a system and method for removing ammonia from a purge gas. The system 100, illustrated in figures 1 and 3, comprises an ammonia absorption arrangement 110 equipped with a water-based absorption liquid. This arrangement 110, which is illustrated in figure 2, is managed by a temperature management system 120 and a controller 130, which together facilitate the operation of the system 100 in two distinct modes: absorption and regeneration. In the absorption mode, the system extracts ammonia from the purge gas, employing the absorption liquid at a controlled lower temperature. In the regeneration mode, the system transitions to a higher temperature to generate ammonia-water vapour, thereby reducing the ammonia concentration in the absorption liquid and restoring its absorption capacity. This operation may be guided by critical parameters, including the ammonia concentration and temperature, which as visualised through the pressure curve P and concentration curve C in the diagram of figure 4. The innovative system 100 allows for the captured ammonia to be used as fuel in a consumer and the absorption liquid to be reused.

The above embodiments are to be understood as illustrative examples of the invention. Further embodiments of the invention are envisaged. For example, additional tanks with absorption liquid may be employed in the same system to increase the ammonia absorption capacity and reduce the risk of residual ammonia in the purge gas. Several tanks may be connected in parallel or in series, depending on the specific configuration. It is to be understood that any feature described in relation to any one embodiment or example may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A system (100) for removing ammonia from a purge gas originating from an ammonia-based fuel system (210), comprising:
an ammonia absorption arrangement (110) configured to accommodate a water-based absorption liquid for absorbing the ammonia from the purge gas, wherein the ammonia absorption arrangement comprises a temperature management system (120) operable to control a temperature of the absorption liquid; and
a controller (130) configured to operate the ammonia absorption arrangement in:
an absorption mode in which the absorption liquid is maintained at a first temperature and the purge gas is passed through the absorption liquid to remove the ammonia from the purge gas, and
a regeneration mode in which the absorption liquid is maintained at a second temperature, exceeding the first temperature, and in which ammonia-water vapour, originating from the absorption liquid, is evacuated from the ammonia absorption arrangement to reduce an ammonia concentration in the absorption liquid.

2. The system according to claim 1, wherein the second temperature is selected such that a pressure in the absorption liquid exceeds an ambient pressure.

3. The system according to claim 1, wherein the second temperature is selected such that a pressure in the absorption liquid is below an ambient pressure.

4. The system according to claim 3, further comprising a fan for evacuating the ammonia-water vapour in the regeneration mode.

5. The system according to any of the preceding claims, wherein the second temperature is selected such that an ammonia concentration in the ammonia-water vapour allows the ammonia-water vapour to be burned by means of a support flame in a burner.

6. The system according to any of claims 1-3, wherein the second temperature is selected such that an ammonia concentration in the ammonia-water vapour allows a stoichiometric mixture of oxygen and the ammonia-water vapour to be flammable at 400°C or less.

7. The system according to any of the preceding claims, wherein the controller is configured to operate the ammonia absorption arrangement in the regeneration mode until a mole fraction of ammonia in the ammonia-water vapour reaches a predetermined lower limit, such as in the range of 30-40%, such as about 34%.

8. The system according to any of the preceding claims, wherein the controller is configured to operate the ammonia absorption arrangement in the regeneration mode until a mole fraction of ammonia in the absorption liquid reaches a predetermined lower limit, such as in the range of 4-8%, such as about 6%.

9. The system according to any of the preceding claims, wherein the ammonia absorption arrangement further comprises:
an absorption chamber (112) for maintaining the absorption liquid at the first temperature and removing the ammonia from the purge gas;
a heating unit (114) for heating the absorption liquid to the second temperature for generating the ammonia-water vapour; and
an evaporation chamber (116) for evacuating the ammonia-water vapour;
wherein the absorption chamber, the heating unit, and the evaporation chamber are fluidically connected to allow the absorption liquid to circulate therebetween.

10. The system according to claim 9, wherein the ammonia absorption arrangement further comprises a cooling unit (118) for reducing a temperature of the absorption liquid before the absorption liquid is recirculated to the absorption chamber.

11. The system according to claim 9 or 10, wherein the controller is configured to operate the ammonia absorption arrangement in the absorption mode and the regeneration mode concurrently.

12. A method for removing ammonia from a purge gas originating from an ammonia-based fuel system, comprising:
passing the purge gas through a water-based absorption liquid of an ammonia absorption arrangement while maintaining the absorption liquid at a first temperature; and
evacuating ammonia-water vapour, originating from the absorption liquid, from the ammonia absorption arrangement while maintaining the absorption liquid at a second temperature, thereby reducing an ammonia concentration in the absorption liquid;
wherein the second temperature exceeds the first temperature.

13. The method according to claim 12, comprising controlling the second temperature such that a pressure in the absorption liquid exceeds an ambient pressure.

14. The method according to claim 12 or 13, comprising:
controlling the second temperature such that an ammonia concentration in the ammonia-water vapour allows the ammonia-water vapour to be used as a fuel supporting a flame in a burner.

15. The method according to claim 14, further comprising combusting the ammonia-water vapour in the burner.

16. The method according to any of claims 12-15, wherein the second temperature is in the range of 55 - 95°C, such as 75 - 90°C.
